# EUROPÄISCHE PATENTSCHRIFT

(11) **EP 0 621 412 B1**
(45) Veröffentlichungstag und Bekanntmachung des Hinweises auf die Patenterteilung: **05.03.1997**
(21) Anmeldenummer: 94105745.7
(22) Anmeldetag: 14.04.1994
(51) Int. Cl.: F16D 1/08, F16H 57/02

(54) **Permanente Kupplung zwischen zwei Wellen**
Permanent coupling between two shafts
Accouplement permanent entre deux arbres

(30) Priorität: 20.04.1993 DE 4312687
(43) Veröffentlichungstag der Anmeldung: 26.10.1994
(73) Patentinhaber: Hans Heynau GmbH, D-80809 München (DE)
(72) Erfinder: Prexler, Franz, D-81739 München (DE); Sabanes-Bove, David, D-82178 Puchheim (DE)
(74) Vertreter: Pohl, Herbert, Dipl.-Ing

(56) Entgegenhaltungen:
- FR-A- 2 316 472
- US-A- 3 806 267
- US-A- 3 836 272

## Beschreibung

Die Erfindung betrifft eine permanente Kupplung zwischen einer Antriebswelle und einer getriebenen Welle, welche ein an seinem der Antriebswelle zugewandten Ende zylindrisch ausgebildetes hohlwellenartiges Kupplungselement enthält und bei der eine am Umfang konische Hülse auf der Antriebswelle durch Klemmen befestigt ist.

Eine solche permanente Kupplung ist bekannt (DE-A-25 32 446). Bei der bekannten permanenten Kupplung ist ein hohlwellenartiges Kupplungsteil unter Zwischenschaltung eines am Umfang konischen Zentrierringes auf einem anderen Kupplungsteil aufgeschoben, wobei der Zentrierring auf diesem Kupplungsteil durch Aufschrumpfen kraftschlüssig befestigt ist.

Die bekannte permanente Kupplung weist den Nachteil auf, daß für jeden Antriebswellen-Durchmesser ein anderes hohlwellenartiges Kupplungselement benötigt wird, welches für diesen Zweck eigens hergestellt werden muß. Das macht den Einsatz, insbesondere wenn nur geringe Stückzahlen benötigt werden, unwirtschaftlich und erfordert eine aufwendige Lagerhaltung. Außerdem ist die Montage des bekannten hohlwellenartigen Kupplungselementes aufwendig und erfordert großes Können und Sorgfalt.

Das der Erfindung zugrunde liegende technische Problem besteht deshalb darin, eine permanente Kupplung zu schaffen, bei welcher für Antriebswellen mit voneinander abweichenden Durchmessern nicht verschiedene Kupplungselemente benötigt werden, sondern die Anpassung der Kupplung an verschiedene Antriebswellen-Durchmesser mit geringem Aufwand und geringen Kosten durchgeführt werden kann.

Dieses technische Problem ist erfindungsgemäß durch folgende Merkmale gelöst:
a) das Kupplungselement besteht aus einem becherförmigen Teil und einem mit dessen Boden verbundenen Wellenstumpf,
b) das offene Ende der Innenkontur des becherförmigen Teils ist zur Aufnahme der Hülse konisch abgeschrägt,
c) die Hülse besitzt zur Anpassung der Kupplung an verschiedene Außenwellen-Durchmesser eine jeweils hieran angepaßte Zentralbohrung, während ihr Außenkonus unverändert bleibt.

Bei der erfindungsgemäßen permanenten Kupplung bleibt das Kupplungselement bei den verschiedenen Antriebswellen-Durchmessern unverändert. Die Anpassung der Kupplung an die verschiedenen Antriebswellen-Durchmesser erfolgt durch eine geänderte Dimensionierung der am Umfang konischsen Hülse. Dabei bleibt die Konizität der Hülse unverändert, denn lediglich ihre Zentralbohrung wird an den Antriebswellen-Durchmesser angepaßt.

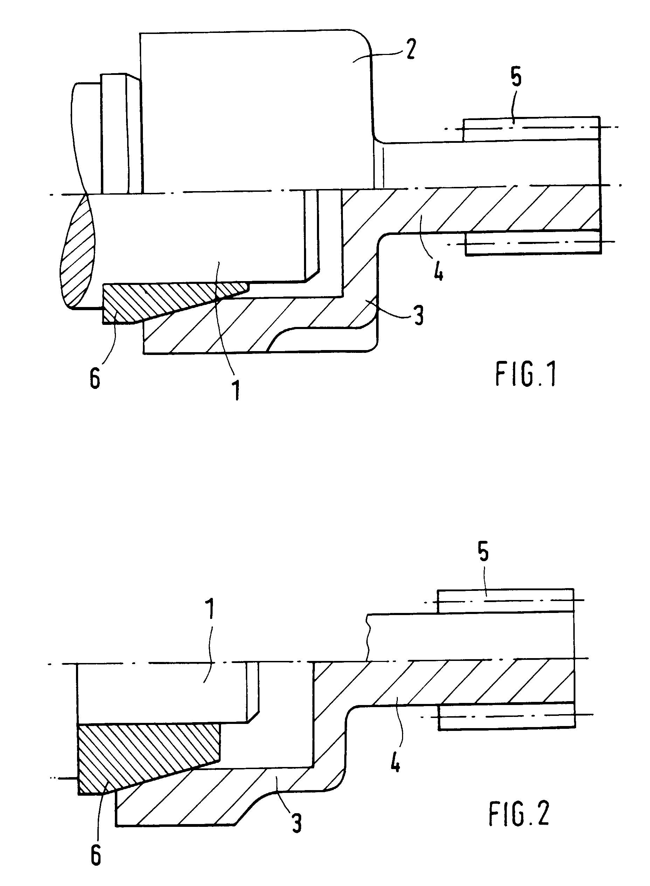

Die Erfindung ist nachstehend anhand der Figuren 1 und 2 erläutert. Es zeigen:
- Fig. 1: ein Ausführungsbeispiel der erfindungsgemäßen permanenten Kupplung - teilweise im Längsschnitt - für die Verwendung bei einer Antriebswelle mit relativ großem Durchmesser und
- Fig. 2: die permanente Kupplung gemäß Fig. 1 für die Verwendung bei einer Antriebswelle mit geringerem Durchmesser.

In Fig. 1 ist die Antriebswelle 1 beispielsweise eines - nicht gezeigten - Elektromotors zu erkennen, welche mit einem Getriebe gekoppelt werden soll. Das Kupplungselement 2 besteht aus dem becherförmigen Teil 3 und dem einstückig mit diesem verbundenen Wellenstumpf 4, auf dem das Ritzel 5 angeordnet ist. Das Ritzel 5 ist bereits die erste Stufe des Getriebes. Die Kopplung zwischen der Antriebswelle 1 und dem Kupplungselement 2 erfolgt durch eine kraftschlüssige Verbindung zwischem dem becherförmigen Teil 3 und der Antriebswelle 1 unter Zwischenschaltung der konischen Hülse 6, d.h. das becherförmige Teil 3 ist unter Zwischenschaltung der konischen Hülse 6 auf die Antriebswelle 1 aufgeschrumpft. Die konische Hülse 6 ist beispielsweise ebenfalls vorher auf die Antriebswelle 1 aufgeschrumpft worden.

Bei dem in Figur 1 gezeigten Ausführungsbeispiel weist die Antriebswelle 1 einen relativ großen Durchmesser auf, so daß die konische Hülse 6 nur einen relativ kleinen Fügespalt zwischen Innenfläche des becherförmigen Teils 3 und der Antriebswelle 1 zu überbrücken hat.

Bei dem in Fig. 2 gezeigten Ausführungsbeispiel ist der Fügespalt wegen des geringeren Durchmessers der Antriebswelle 1 größer. Die konischse Hülse 6 weist daher eine größere Wandstärke auf. Die konischse Hülse 6 ist an diesen Anwendungsfall dadurch angepaßt worden, daß sie auf einen geringeren Innendurchmesser aufgebohrt worden ist als die konische Hülse 6 in Fig. 1.

## Patentansprüche

1. Permanente Kupplung zwischen einer Antriebswelle (1) und einer getriebenen Welle, welche ein an seinem der Antriebswelle (1) zugewandten Ende zylindrisch ausgebildetes hohlwellenartiges Kupplungselement (2) enthält und bei der eine am Umfang konische Hülse (6) auf der Antriebswelle (1) durch Klemmen befestigt ist, **gekennzeichnet durch** folgende Merkmale:
a) das Kupplungselement (2) besteht aus einem becherförmigen Teil (3) und einem mit dessen Boden verbundenen Wellenstumpf (4),
b) das offenen Ende der Innenkontur des becherförmigen Teils (3) ist zur Aufnahme der Hülse (6) konisch abgeschrägt,
c) die Hülse (6) besitzt zur Anpassung der Kupplung an verschiedene Außenwellen-Durchmesser eine jeweils hieran angepaßte Zentralbohrung, während ihr Außenkonus unverändert bleibt.

2. Permante Kupplung nach Anspruch 1,
dadurch gekennzeichnet, daß das becherförmige Teil (3) unter Zwischenschaltung der konischen Hülse (6) mit der Antriebswelle (1) durch thermisches Fügen verbunden ist.

## Claims

1. A permanent coupling between a drive shaft (1) and a driven shaft, which at its end facing the drive shaft (1) comprises a cylindrically constructed hollow shaft-like coupling element (2) and in which a circumferentially conical sleeve (6) is secured to the drive shaft (1) by clamping, characterised by the following features:
a) the coupling element (2) comprises a cup-shaped part (3) and a shaft stump (4) connected to the base of the cup-shaped part,
b) the open end of the inner contour of the cup-shaped part (3) is bevelled conically in order to receive the sleeve (6),
c) for adapting the coupling to different outer shaft diameters, the sleeve (6) comprises a central bore which is adapted to said outer diameter in each case, whilst the outer cone of the sleeve remains unchanged.

2. A permanent coupling according to claim 1,
characterised in that the cup-shaped part (3) is connected to the drive shaft (1) by thermal joining with the interposition of the conical sleeve (6).

## Revendications

1. Accouplement permanent entre un arbre menant (1) et un arbre mené, cet accouplement comprenant à son extrémité dirigée vers l'arbre menant (1) un élément d'accouplement (2) en forme d'arbre creux cylindrique, ainsi qu'une douille conique (6), fixée à l'arbre menant (1) par serrage, caractérisé par le fait que :
a) l'élément d'accouplement (2) est constitué d'une partie en forme de coupe (3) et d'une extrémité de l'arbre (4) reliée à la base de cette coupe,
b) l'extrémité ouverte du profil intérieur de la partie en forme de coupe (3) présente une forme conique pour la réception de la douille (6),
c) la douille (6) contient, pour l'adaptation de l'accouplement à différents diamètres extérieurs des arbres, un alésage de centrage adapté à ceux-ci, tandis que sa forme conique extérieure reste inchangée.

2. Accouplement permanent suivant la revendication 1,
caractérisé par le fait que la partie en forme de coupe (3) est liée à l'arbre menant (1) par frettage à chaud après intercalage de la douille conique (6).
